# FASCICULE DE BREVET EUROPEEN

(11) **EP 0 700 824 B1**
(45) Date de publication et mention de la délivrance du brevet: **21.07.1999**
(21) Numéro de dépôt: 95410090.5
(22) Date de dépôt: 01.09.1995
(51) Int. Cl.: B62M 3/00, B62M 1/10

(54) **Dispositif de pédalage à suspension pour des cycles**
Gefederte Fahrradpedalvorrichtung
Suspension pedaling device for bicycles

(30) Priorité: 08.09.1994 FR 9410935
(43) Date de publication de la demande: 13.03.1996
(73) Titulaire: Gignoux, Pierre, 38700 Le Sappey-en-Chartreuse (FR)
(72) Inventeur: Gignoux, Pierre, 38700 Le Sappey-en-Chartreuse (FR)
(74) Mandataire: Hecké, Gérard

(56) Documents cités:
- FR-A- 431 701
- FR-A- 2 409 183
- GB-A- 232 424
- US-A- 5 060 536

## Description

L'invention est relative à un dispositif de pédalage pour des cycles à pédales, comprenant:
- une première manivelle située à droite, et une deuxième manivelle disposée à gauche par rapport au cadre support dans le sens d'avancement du cycle,
- une pédale articulée à l'extrémité de chaque manivelle sur laquelle prend appui le pied gauche ou droit du cycliste,
- un axe de pédalier en liaison mécanique avec les deux manivelles et associé à des moyens de transmission, ayant notamment une couronne dentée et une chaîne d'entraînement de la roue arrière du cycle.

Certains cycles connus comportent une suspension télescopique au niveau du cadre de support de la roue arrière. La mise en place d'une telle suspension occasionne un supplément de poids, et engendre un phénomène de pompage, lequel dissipe de l'énergie durant la phase de pédalage. Un autre dispositif de suspension est visible dans GB-A-232 424.

L'objet de l'invention consiste à réaliser un dispositif de pédalage procurant une suspension arrière évitant tout phénomène de pompage pendant l'avancement normal du cycle.

Le dispositif de pédalage selon l'invention est caractérisé en ce que des moyens d'actionnement sont agencés pour occuper un premier état de pédalage autorisant une transmission mécanique directe du couple exercé par les pédales dans le sens de pédalage grâce à un accouplement rigide en rotation des deux manivelles par rapport aux moyens de transmission, et un deuxième état d'amortissement faisant usage d'un dispositif à suspension procurant un accouplement élastique en rotation des deux manivelles par rapport au cadre, lorsque l'utilisateur se trouve en appui sur les deux pédales en exerçant des efforts antagonistes sans pédaler.

Le dispositif de suspension fonctionne uniquement lorsque le cycliste se trouve debout en appui sur les pédales.

Le dispositif de suspension est placé entre les pédales et le boîtier de pédalier, en réalisant les deux fonctions suivantes: il permet d'une part la transmission directe, sans dissipation d'énergie, de la force exercée sur les pédales et permet d'autre part la suspension du pilote en appui sur les deux pédales. La simplicité et la sobriété du mécanisme en font sa légèreté.

Le dispositif selon l'invention utilise le principe suivant: une liaison rigide entre pédale et pédalier assure la transmission intégrale du couple de pédalage, et une liaison souple entre les deux pédales assure la suspension du pilote en appui sur ses pédales.

Selon une caractéristique de l'invention, les moyens d'actionnement comportent un premier organe de commande solidaire de l'axe de pédalier , et un deuxième organe de commande solidaire de la manivelle correspondante, les deux organes étant rendus solidaires dans le premier état de pédalage classique, et se trouvant indépendants l'un de l'autre dans le deuxième état suite à un mouvement relatif de basculement déterminé par l'intervention du dispositif à suspension.

Le dispositif à suspension est logé dans un berceau du deuxième organe de commande, et est réalisée au moyen d'un ressort, d'un bloc en matériau élastomère, ou d'un système oléopneumatique, relié au premier organe de commande par une tige de liaison, le dispositif à suspension étant équipé d'un système de réglage de la précontrainte pour ajuster le déplacement relatif des premier et deuxième organes en fonction du poids du cycliste.

Le dispositif peut être réalisé du côté gauche du cycle. Dans ce cas, le cycliste en appui sur ses pédales, devra se positionner obligatoirement avec son pied gauche en arrière pour bénéficier de la suspension.

Le dispositif peut également être installé du côté droit du cycle. Dans ce cas, le cycliste en appui sur ses pédales, devra se positionner obligatoirement avec son pied droit en arrière pour bénéficier de la suspension.

Le dispositif peut être réalisé des deux côtés du cycle, cette dernière solution offrant au cycliste la possibilité de se positionner indifféremment pied droit en avant ou pied gauche en avant, en appui sur les pédales.

Le dispositif de suspension peut faire usage d'un seul module, ou d'une paire de modules élastiques avec une disposition en série, en parallèle ou en croix.

L'ensemble du mécanisme peut être disposé dans un carter de protection solidaire de la manivelle, le dispositif de suspension pouvant être disposé à l'extérieur ou intégré au carter. L'articulation de la manivelle suspendue peut être coaxiale ou décentrée par rapport à l'axe de pédalier.

Selon un mode de réalisation, le bras de commande solidaire de l'axe de pédalier porte à son extrémité un axe d'articulation de la manivelle, le dispositif de suspension comprenant une pluralité de barres de flexion de formes allongées, fixées sur le bras de commande par des moyens de fixation.

Selon un autre mode de réalisation, l'axe de pédalier peut lui-même assurer la suspension. En le fabriquant dans un matériau élastique, l'axe fonctionnera comme une barre de torsion, un autre axe creux entourant celui-ci assurant la transmission directe de l'effort de pédalage.

Selon un mode de réalisation préférentiel, le dispositif de suspension est situé d'un côté du cadre en étant associé à la deuxième maniveile articulée sur l'axe de pédalier, et comprenant de plus:
- une couronne accouplée à l'une des extrémités de l'axe de pédalier, et ayant au moins un trou oblong dans lequel s'engage une tige de transmission solidaire de la deuxième manivelle,
- un plateau de support de la couronne dentée, et accouplé en rotation sur l'autre extrémité de l'axe de pédalier,
- des moyens d'accouplement à tiges pour solidariser la première manivelle au plateau,
- un tambour monté à rotation libre et s'étendant coaxialement par rapport à l'axe de pédalier, et le boîtier du cadre, l'ensemble étant agencé pour assurer la fonction suspension avec le pied droit ou gauche en avant.

D'autres avantages et caractéristiques ressortiront plus clairement de la description qui va suivre de plusieurs modes de réalisation de l'invention, donnés à titre d'exemples non limitatifs, et représentés aux dessins annexés, dans lesquels:
- les figures 1 et 2 représentent des vues schématiques en perspective du dispositif de pédalage à suspension selon l'invention, respectivement dans l'état de suspension lorsque l'utilisateur est debout en appui sur les pédales, et dans l'état de pédalage normal;
- La figure 3 montre une vue en élévation d'un premier mode de réalisation des moyens d'actionnement du dispositif à suspension situé sur le côté gauche du cycle, l'ensemble étant représenté en position active de suspension lorsque le cycliste est en appui sur les pédales;
- la figure 4 est une vue éclatée en perspective du dispositif de la figure 3,
- la figure 5 est une vue identique de la figure 4, avec le dispositif installé du côté droit du cycle, l'amortisseur du dispositif à suspension n'étant pas représenté, mais est identique à celui de la figure 4;
- la figure 6 est une vue en perspective semi-éclatée d'une variante de réalisation;
- les figures 7 et 8 montrent des vues en élévation de la figure 6, respectivement dans l'état de suspension, et dans l'état de pédalage;
- les figures 9 et 10 sont des vues identiques aux figures 7 et 8 d'une autre variante de réalisation avec une paire de modules élastiques en série;
- la figure 11 est une vue éclatée en perspective d'une autre variante, avec une paire de modules élastiques fonctionnant en parallèle;
- les figures 12 et 13 montrent les vues en élévation du dispositif monté de la figure 11, respectivement dans l'état de suspension, et dans l'état de pédalage;
- la figure 14 montre une vue en élévation d'une autre variante avec un mécanisme circulaire disposé du côté droit;
- la figure 15 représente le mécanisme de la figure 14 dans l'état de suspension, la cage servant de support à la couronne dentée d'entraînement;
- les figures 16 et 17 sont des vues identiques à celles des figures 7 et 8, d'une variante de réalisation avec décentrage de l'axe d'articulation de la manivelle par rapport à l'axe de pédalier.
- La figure 18 est une vue en perspective partiellement éclatée et en coupe, d'une autre variante de réalisation, avec deux modules élastiques fonctionnant l'un en traction et l'autre en compression;
- la figure 19 est une vue en perspective d'une autre variante équipée de barres de flexion;
- la figure 20 est une vue en perspective éclatée d'une autre variante équipée d'un système d'engrenage;
- la figure 21 est une vue en perspective de la manivelle de gauche d'une autre variante avec un système à barre de torsion;
- la figure 22 représente une vue en coupe axiale du pédalier selon la figure 21, et autorisant la fonction de suspension indifféremment avec le pied gauche ou droit en arrière;
- la figure 23 est une vue en perspective éclatée d'une autre variante autorisant la fonction de suspension en position avant du pied droit ou gauche du cycliste;
- la figure 24 est une vue en coupe axiale du pédalier monté selon la figure 23.

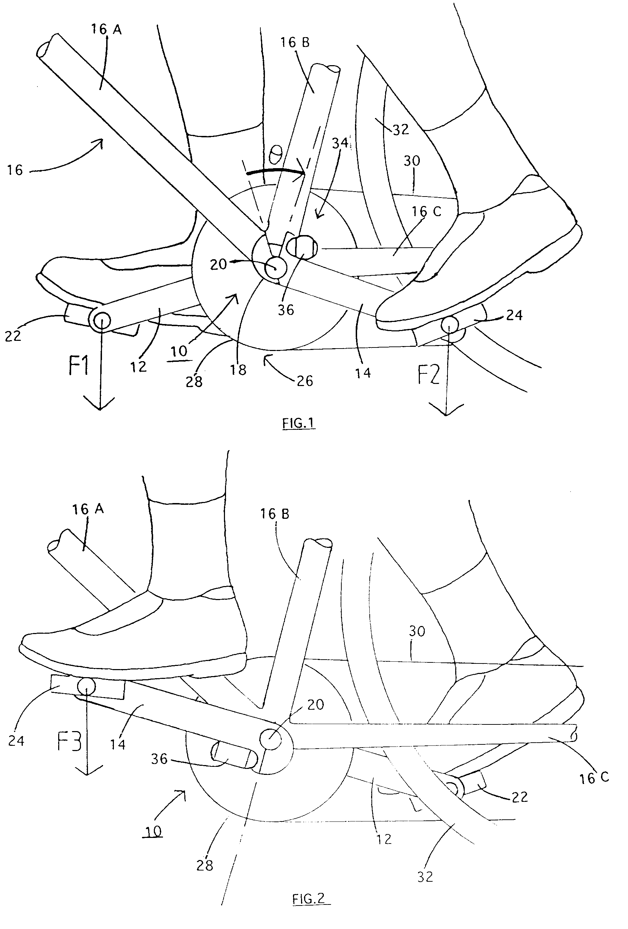

En référence aux figures 1 et 2, un dispositif de pédalage 10 pour des cycles à pédales comporte une première manivelle 12 située à droite et une deuxième manivelle 14 disposée à gauche par rapport au cadre support 16 dans le sens d'avancement du cycle. Le cadre support 16 est représenté partiellement par trois tubes 16A ,16B ,16C réunis ensemble à la partie inférieure par un boîtier 18 tubulaire transversal, lequel est traversé par un axe de pédalier 20 coopérant avec les deux manivelles 12, 14.

A l'opposé de l'axe de pédalier 20, l'extrémité de chaque manivelle 12, 14 est dotée d'une pédale 22, 24 articulée, sur laquelle prend appui le pied gauche ou droit du cycliste. L'axe de pédalier 20 est associé à des moyens de transmission 26 comprenant une couronne dentée 28 et une chaîne 30 d'entraînement de la roue arrière 32 du cycle.

Selon l'invention, le dispositif de pédalage 10 est équipé de moyens d'actionnement 34 susceptibles d'occuper un premier état ( figure 2) autorisant une transmission mécanique directe du couple exercé par les pédales 22, 24 dans le sens du pédalage indiqué par la flèche F3 grâce à un accouplement rigide en rotation des deux manivelles 12, 14 par rapport aux moyens de transmission 26, et un deuxième état ( figure 1) d'absorption des chocs par l'intermédiaire d'un dispositif à suspension 36 permettant d'obtenir un accouplement élastique en rotation des deux manivelles 12, 14 par rapport aux moyens de transmission 26 lorsque l'utilisateur se trouve en appui sur les deux pédales 22, 24 en exerçant des efforts antagonistes selon les flèches F1 et F2 sans pédaler.

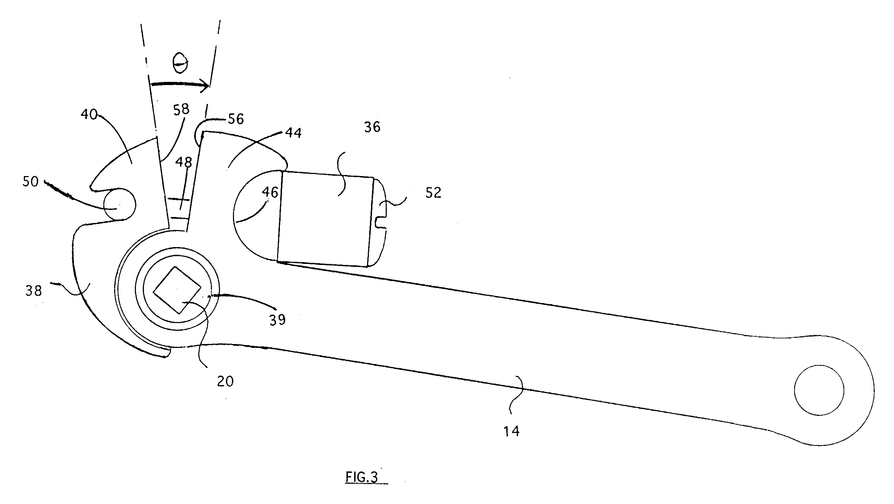

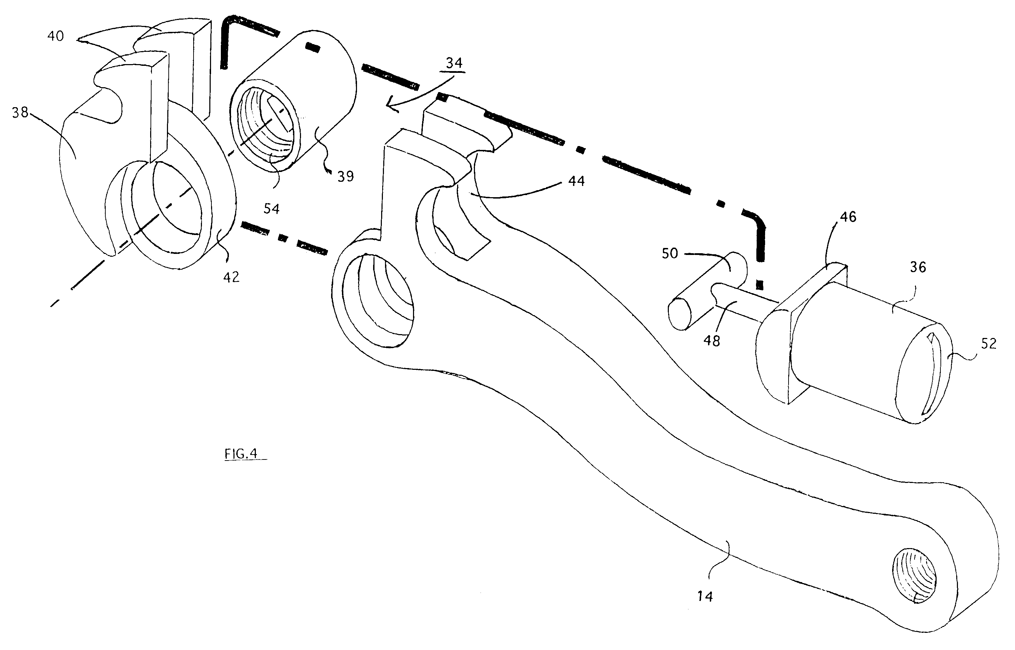

Un premier mode de réalisation des moyens d'actionnement 34 des figures 1 et 2 est représenté sur les figures 3 et 4. Les moyens d'actionnement 34 sont situés du côté gauche en coopérant avec la deuxième manivelle 14 et l'axe de pédalier 20, et comportent un organe d'entraînement 38 en forme de demi-lune, rendu solidaire du dispositif de pédalage 10 par l'intermédiaire d'une douille de couplage 39 avec l'axe de pédalier 20. L'organe d'entraînement 38 est pourvu d'un ergot d'accrochage 40, et d'une pièce de fixation 42 annulaire dans laquelle est emmanchée la douille de couplage 39. La deuxième manivelle 14 est montée à articulation sur la douille 39 coaxialement avec la pièce de fixation 42 et l'axe de pédalier 20, et est pourvue d'autre part d'un berceau 44 de maintien du dispositif de suspension 36.

Le dispositif de suspension 36 peut être réalisé au moyen d'un organe mécanique à ressorts, ou d'un bloc en matériau élastomère, ou encore d'un système oléopneumatique. Tout autre composant ou module ayant les propriétés élastiques d'amortissement d'une suspension peut bien entendu être utilisé.

Le dispositif de suspension 36 comporte une embase 46 en forme de calotte semi-cylindrique logée dans le berceau 44, l'ensemble étant fixé par une tige 48 équipée d'un tenon 50 maintenu derrière l'ergot d'accrochage 40. Une vis de réglage 52 permet d'ajuster la précontrainte du dispositif à suspension 36 de manière à régler l'enfoncement des moyens d'actionnement 34 en fonction du poids du cycliste.

L'intérieur de la surface latérale cylindrique de la douille de couplage 39 est doté d'un filetage 54 autorisant l'extraction des moyens d'actionnement 34 à l'aide d'un outil extracteur de manivelle.

Le fonctionnement du dispositif de pédalage 10 selon les figures 1 à 4 est le suivant:

Sur les figures 1 et 3, le cycliste est debout sur les pédales 22, 24 en exerçant des forces antagonistes F1 et F2 qui tendent à écarter l'organe d'entraînement 38 et le berceau 44, et à ouvrir l'articulation entre les deux manivelles 12, 14 d'un angle θ. L'articulation est retenue par le dispositif à suspension 36 qui se trouve à l'état comprimé.

Sur la figure 2, le cycliste exerce une force F3 sur la pédale 24 dans le sens d'avancement. La face active 56 de la deuxième manivelle 14 vient en engagement avec l'épaulement 58 de la demi-lune, en transmettant la force d'actionnement à l'axe de pédalier 20 et les moyens de transmission 26.

Le passage des moyens d'actionnement 34 vers le premier état permet d'obtenir une liaison mécanique rigide entre la manivelle 14 et l'axe de pédalier 20, en assurant une transmission intégrale du couple de pédalage. Le passage inverse vers le deuxième état engendre une liaison souple entre les deux pédales 22, 24 pour assurer la suspension du pilote en appui sur les pédales 22, 24.

Les moyens d'actionnement 34 mettent en jeu deux éléments entre la pédale 24 et l'axe de pédalier 20, l'un fixé à la douille 39 de couplage avec l'axe de pédalier 20, et l'autre assujetti à la pédale 24 par l'intermédiaire de la manivelle 14. Les deux éléments sont rendus solidaires lors du pédalage classique, et sont indépendant l'un de l'autre en étant reliés par le dispositif à suspension 36 pour l'effort inverse.

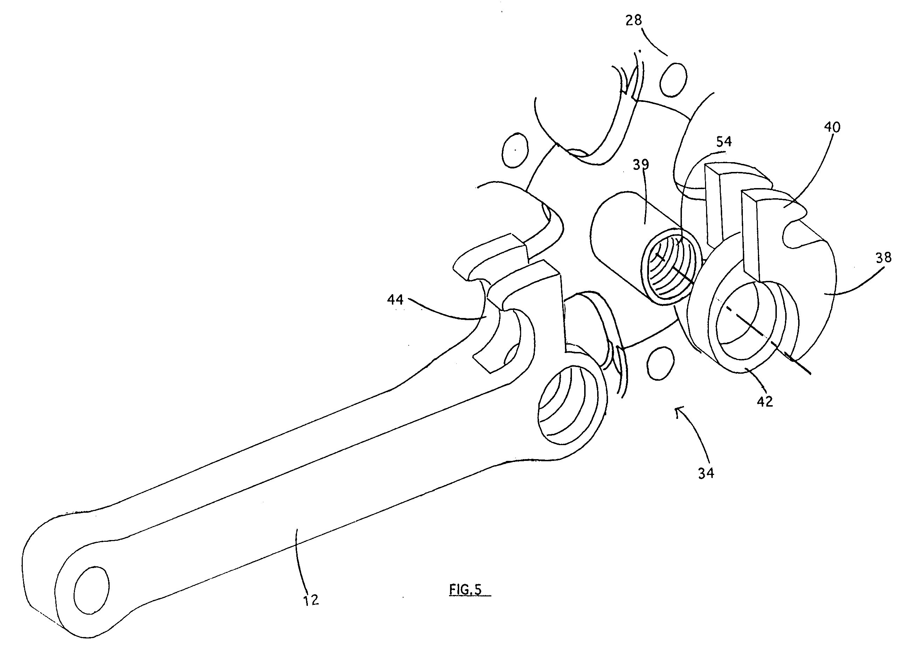

En référence à la figure 5, les moyens d'actionnement 34 installés sur le côté droit de l'axe de pédalier, sont pratiquement identiques à ceux de gauche des figures 1 à 4. Les mêmes numéros de repères seront donc utilisés pour cette variante. La différence se situe au niveau de la douille de couplage 39 fixé à l'axe de pédalier et supportant la ou les couronnes 28 dentées dotées des moyens de transmission 26. Le dispositif à suspension 36 n'est pas représenté, mais il est identique à celui de la figure 3.

La présence des moyens d'actionnement 34 sur le côté droit du cycle impose le positionnement du pied droit en arrière pour bénéficier de la suspension lorsque le cycliste est en appui sur les pédales 22, 24.

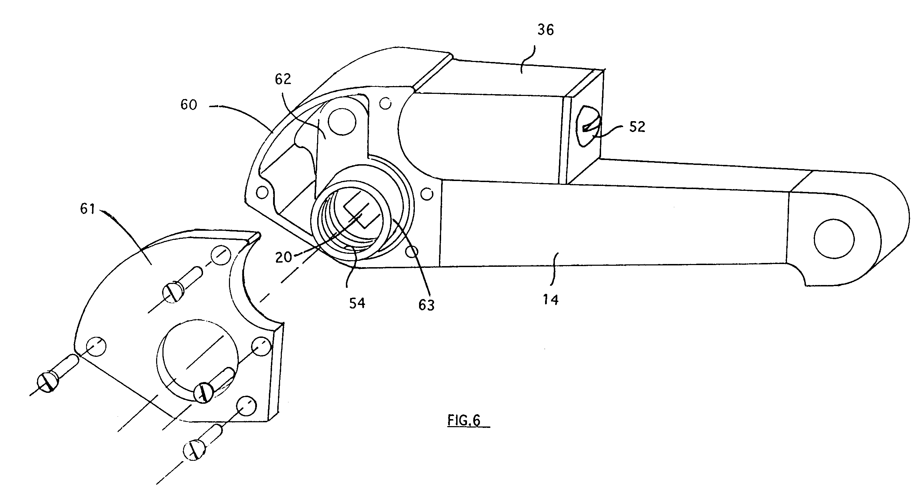

Sur les figures 6 à 8, les moyens d'actionnement 34 sont logés dans un carter 60 de protection à couvercle 61 de fermeture, et sont pourvus d'un levier de commande 62 rendu solidaire du dispositif de pédalage 10 par l'intermédiaire de l'axe de pédalier 20. La manivelle 14 est formée par un prolongement du carter 60, et s'articule autour d'une embase 63 annulaire du levier 62. Le dispositif à suspension 36 est constitué par un bloc cubique en matériau élastomère relié mécaniquement au levier de commande 62 par une tige filetée 64. Le bloc d'élastomère se trouve directement en appui sur la manivelle 14 à l'extérieur du carter 60, et l'embase 63 comporte un filetage 54 autorisant l'extraction du dispositif à l'aide d'un extracteur de manivelle.

La fonction suspension (figure 7) est obtenue lorsque le cycliste est en appui sur les pédales, entraînant un débattement angulaire de course θ entre les deux manivelles 12, 14, qui est proportionnel aux efforts ou chocs exercés sur les pédales. Le levier de commande 62 pivote dans le sens anti-horaire , avec la formation d'un couple de rappel entre les manivelles 12, 14 exercé suite à la compression du bloc d'élastomère. Le réglage de la précontrainte s'effectue par vissage de la vis 52 comme dans le cas précédent.

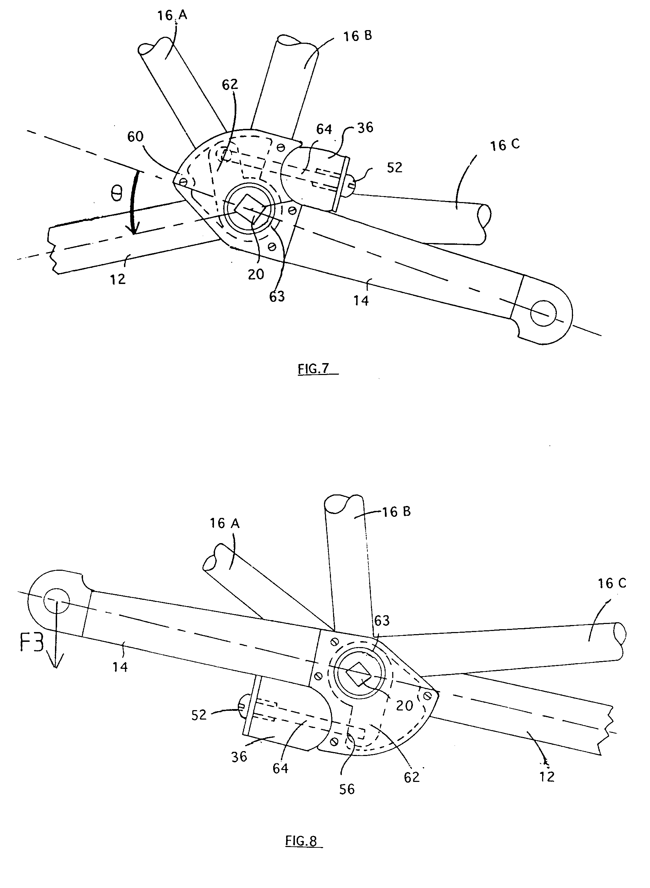

La fonction de pédalage (figure 8) intervient lorsque le cycliste pédale d'une manière classique dans le sens anti-horaire indiqué par la flèche F3. La surface active 56 de la manivelle 14 entraîne le levier de commande 62 et l'axe du pédalier 20 dans le même sens de rotation, suivi de l'entraînement de la roue arrière par les moyens de transmission 26 illustrés à la figure 1. Un tel dispositif permet d'avoir un encombrement réduit, et un mécanisme protégé avec une facilité de réglage de l'amortissement.

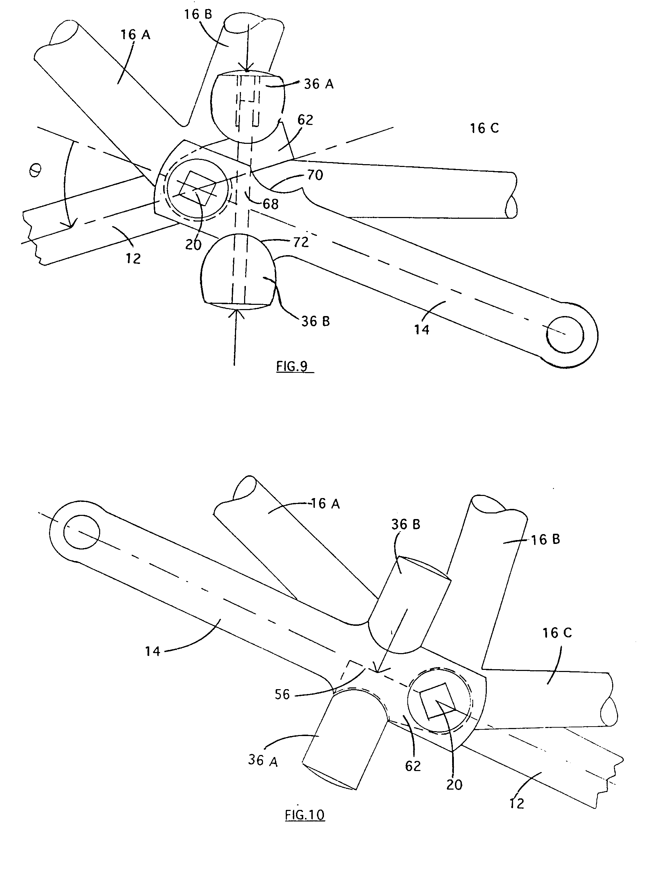

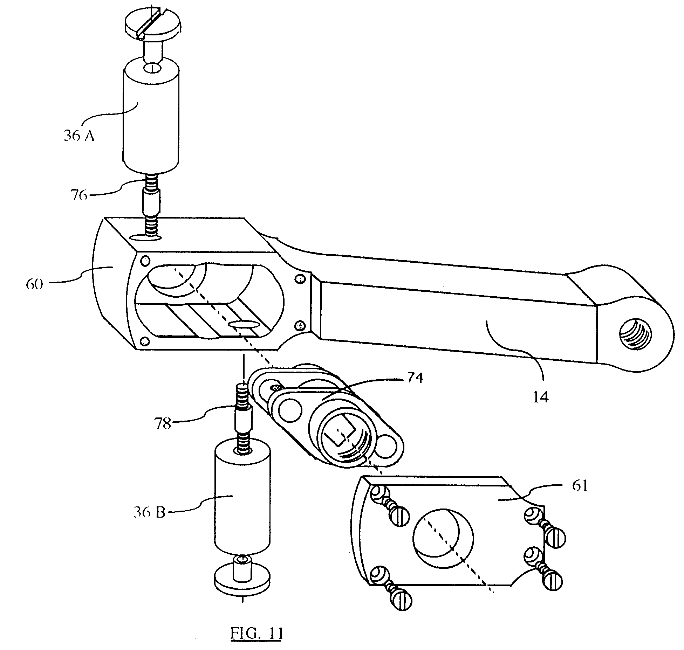

Selon la variante de réalisation illustrée aux figures 9 et 10, le dispositif de suspension 36 comporte une paire de blocs en élastomère 36A, 36B réunis entre eux par une tige filetée 68 commune pour constituer une liaison série. Le premier bloc 36A coopère avec le levier de commande 62 solidaire de l'axe de pédalier 20, et avec une première cavité 70 de la manivelle 14. Le deuxième bloc 36B coopère avec une deuxième cavité 72 de la manivelle 14 située à l'opposé de la première cavité 70.

Le fonctionnement du dispositif des figures 9 et 10 est similaire à celui décrit précédemment, le couple de rappel entre les manivelles 12 et 14 dans la fonction suspension (figure 9) étant exercé par compression des deux blocs 36A, 36B en élastomère. Pour la fonction de pédalage (figure 10), la surface active 56 de la manivelle 14 entraîne le levier de commande 62 solidaire de l'axe de pédalier 20.

Le dispositif des figures 9 et 10 peut bien entendu être prévu sur le côté droit du cycle.

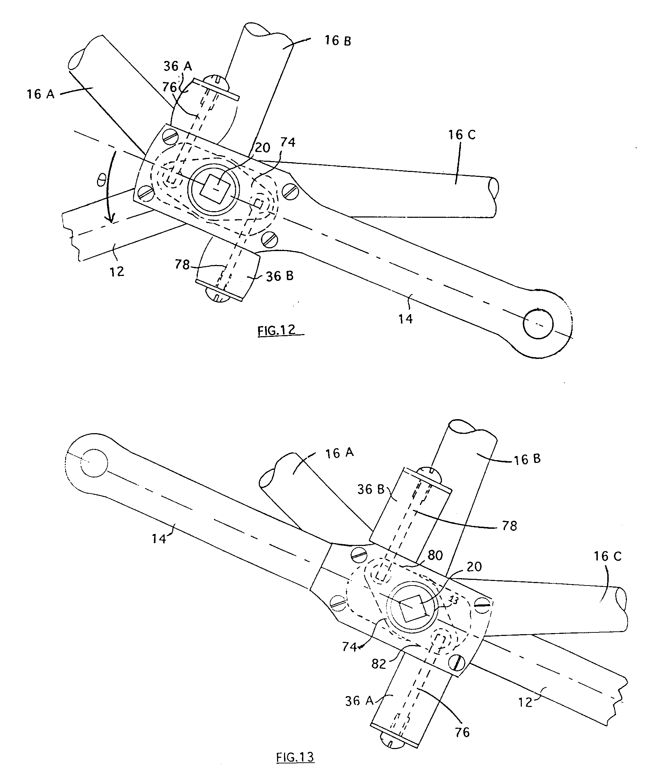

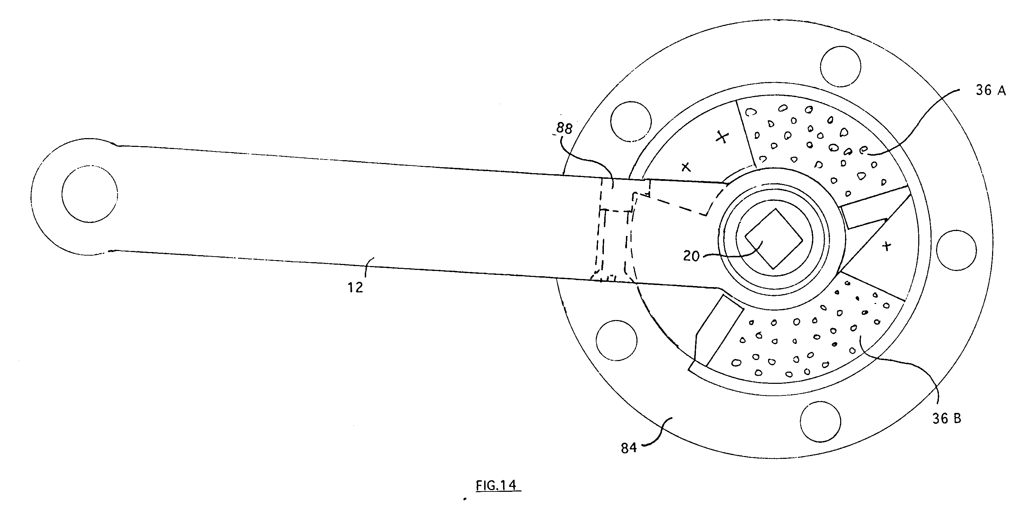

En référence à la variante des figures 11 à 13, les moyens d'actionnement 34 comportent une fourchette 74 de commande solidaire de l'axe de pédalier 20, l'ensemble étant logé dans un carter 60. La fourchette 74 coopère avec deux tiges filetées 76, 78 de fixation d'une paire de blocs 36A, 36B opposés en élastomère constituant le dispositif de suspension 36. Les deux blocs 36A, 36B travaillent en parallèle selon un fonctionnement en suspension (figure 12) identique à celui décrit précédemment. Pour la fonction de pédalage (figure 13), les deux surface actives 80, 82 de la manivelle 14 entraînent la fourchette 74 solidaire de l'axe du pédalier 20. Il en résulte un effort modéré sur les paliers dû à l'équilibre des forces par rapport à l'axe de pédalier 20, lesdites forces étant exercées soit par les blocs en élastomère 36A, 36B dans la fonction suspension, soit par les surfaces actives 80, 82 dans la fonction pédalage.

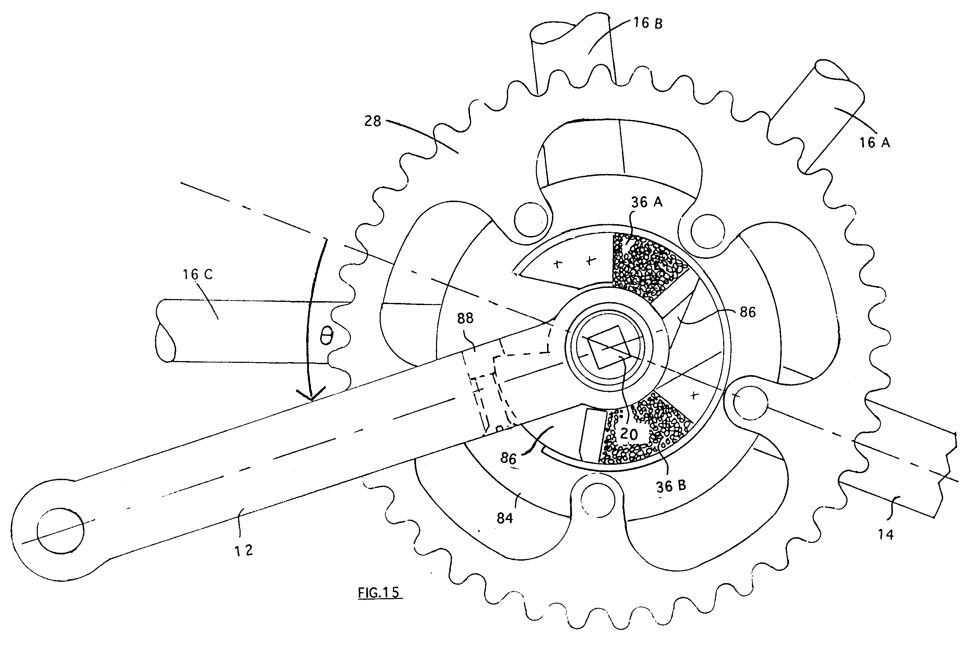

En référence aux figures 14 et 15, les moyens d'actionnement 34 sont montés sur le côté droit, et sont constitués par une cage de commande 84 solidaire de la couronne dentée 28 et de l'axe de pédalier 20. La première manivelle 12 est articulée autour de la cage 84 circulaire, et le dispositif de suspension 36 comporte des blocs 36A, 36B en élastomère conformés selon des secteurs circulaires logés à l'intérieur de la cage 84. Chaque bloc 36A, 36B est en appui d'un côté sur la cage 84, et de l'autre côté sur une étoile 86 articulée autour de la manivelle 12 et bloqué en rotation par une clé 88.

Pour la fonction suspension correspondant au passage de la manivelle 12 de la position illustrée à la figure 14 à celle de la figure 15, I'étoile 86 provoque la compression des deux blocs en élastomère 36A, 36B à l'intérieur de la cage 84.

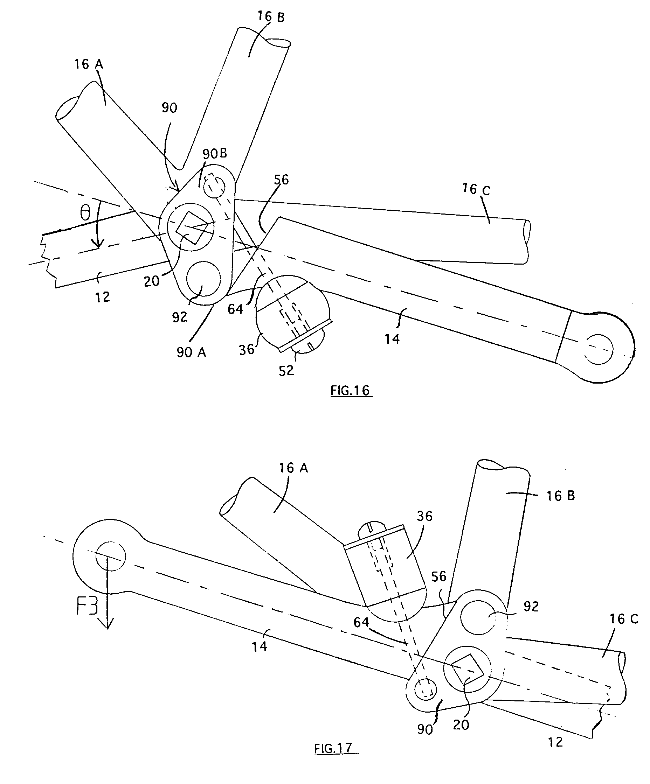

En référence à la variante représentée aux figures 16 et 17, un levier de commande 90 est monté coaxialement sur l'axe de pédalier 20 et comporte un premier bras 90A sur lequel est agencé l'axe d'articulation 92 de la manivelle 14. Le bloc en élastomère du dispositif de suspension 36 prend appui sur la manivelle 14, et est lié mécaniquement au deuxième bras 90B du levier de commande 90 par une tige de liaison 64. L'axe d'articulation 92 est décentré par rapport à l'axe de pédalier 20.

La fonction de suspension est similaire à celle décrite précédemment, avec formation d'un débattement angulaire entre la surface active 56 de la manivelle 14 et le chant correspondant du levier 90 (figure 16), et compression du bloc élastomère 36. La fonction de pédalage reste invariable après l'entraînement du levier 90 par la surface active 56 de la manivelle 14.

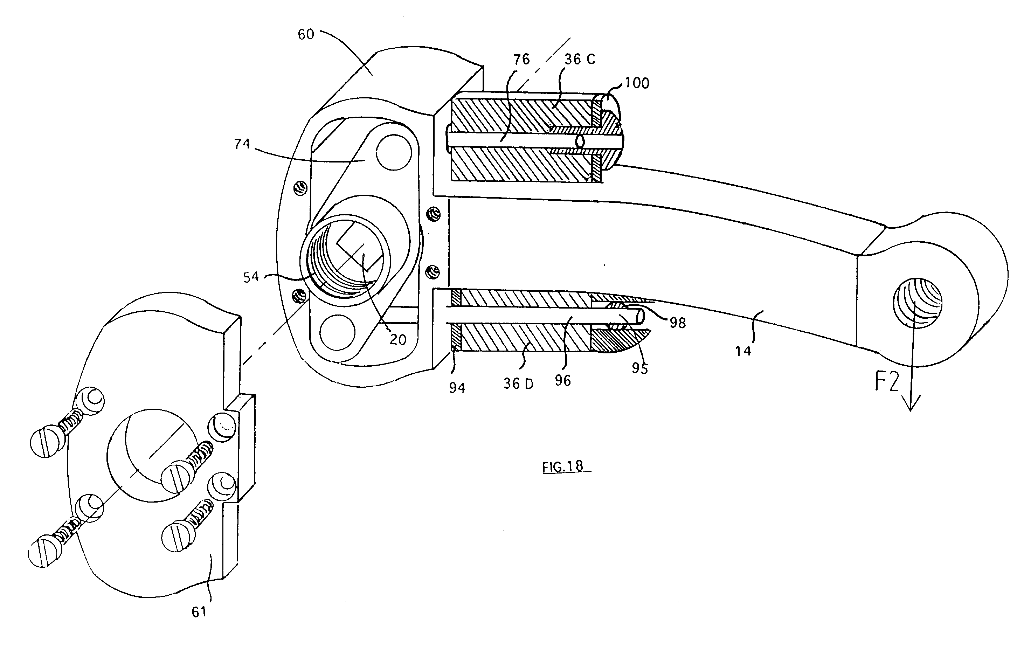

Sur la figure 18, le carter 60 solidaire de la manivelle 14 renferme une fourchette de commande 74 montée coaxialement avec l'axe de pédalier 20.

Le dispositif de suspension 36 comporte un premier élément en élastomère 36C relié à la fourchette 74 par une tige de liaison 76, et un deuxième élément en élastomère 36D situé du même côté. A l'une des faces frontales du deuxième élément 36D est accolée une rondelle 94 fixée à une tige 96, dont l'une des extrémités est reliée à la fourchette 74 à l'opposé du point de liaison de la tige 74, et dont l'autre extrémité 95 traverse librement un axe 98 lié à la manivelle 14 par une liaison à pivot.

Lorsque le cycliste est en appui sur les pédales pour engendrer la fonction de suspension, le couple de rappel entre les manivelles 12, 14 résulte de la compression des deux blocs en élastomère 36C, 36D. Le premier élément 36C est comprimé entre la rondelle 100, et le carter 60 de la manivelle 14. Le deuxième élément 36D est comprimé entre la rondelle 94 et la manivelle 14. Lors de la fonction de pédalage, les surfaces actives internes du carter 60 de la manivelle 14 entraînent la fourchette 74 sans comprimer les blocs en élastomère 36C, 36D.

Le mécanisme de la figure 18 permet de réduire la réaction sur les paliers suite à l'équilibre des forces par rapport à l'axe de pédalier 20.

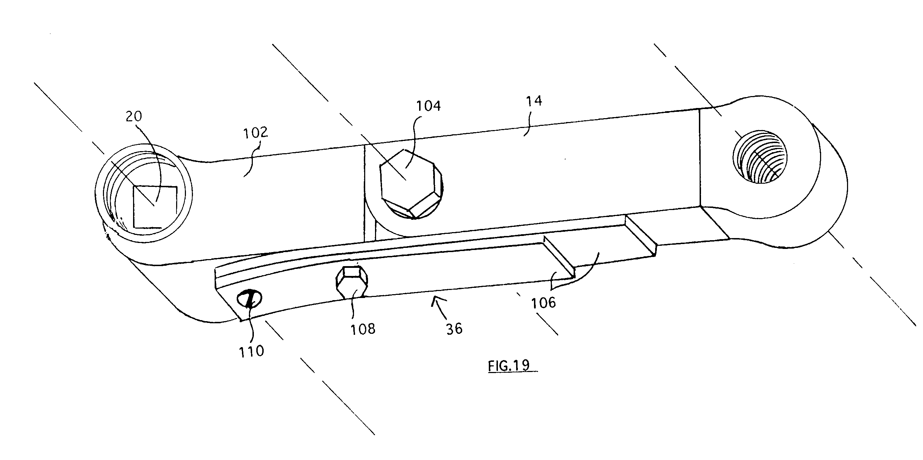

Sur la figure 19, un bras de commande 102 est rendu solidaire de l'axe de pédalier 20, et porte à son extrémité un axe 104 sur lequel est articulé la manivelle 14. Le dispositif de suspension 36 est constitué de plusieurs barres 106 fixées sur les bras de commande 102 au moyen d'un boulon 108 et d'une vis 110. La fonction de suspension résulte de la flexion des barres 106 lorsque le cycliste est en appui sur la pédale 24 en exerçant une force F2. Il est évident que ce dispositif pourrait être monté sur le côté droit du cycle, avec un fonctionnement identique et symétrique par rapport à celui de la figure 19.

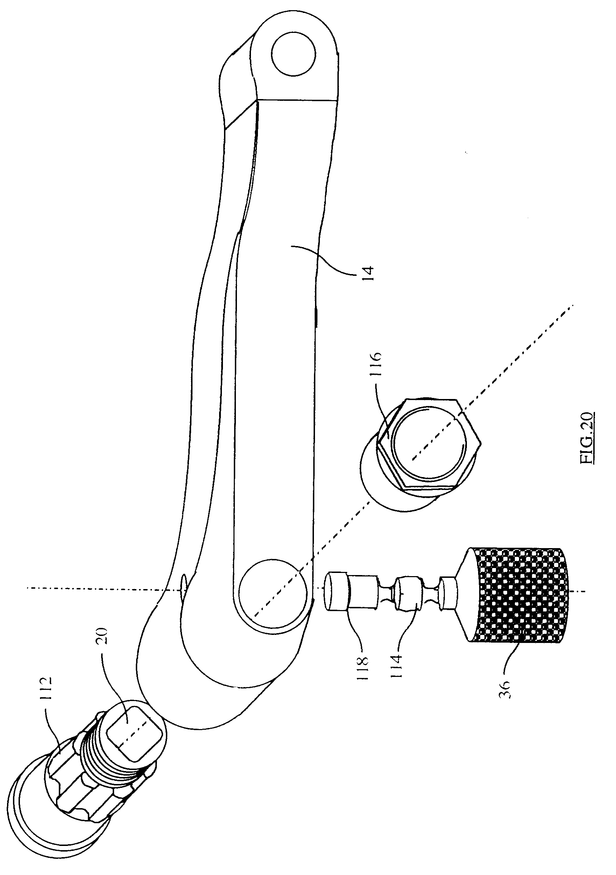

Dans l'exemple de la figure 20, le dispositif de pédalage 10 comporte un axe 112 partiellement cannelé rendu solidaire de l'axe de pédalier 20. La manivelle 14 est articulée sur l'axe 112, et le dispositif à suspension 36 est associé à une tige cannelée 114 coopérant par engrenage avec les cannelures de l'axe 112 pour comprimer le bloc d'élastomère du dispositif à suspension 36 lorsque le cycliste se trouve en appui sur les pédales. Une bague 116 est vissée sur le bout fileté de l'axe 112. Pour la fonction de pédalage, la surface d'appui 118 de la tige cannelée 114 est en butée contre la manivelle 14, laquelle entraîne directement l'axe de pédalier 20.

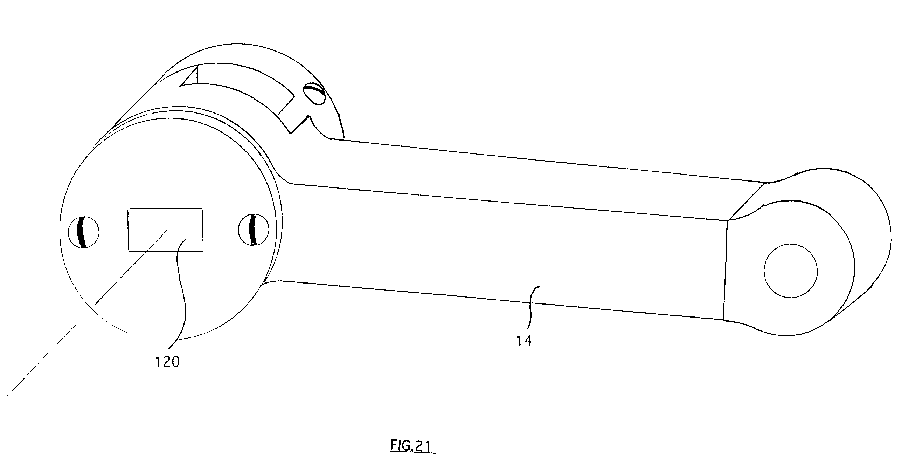

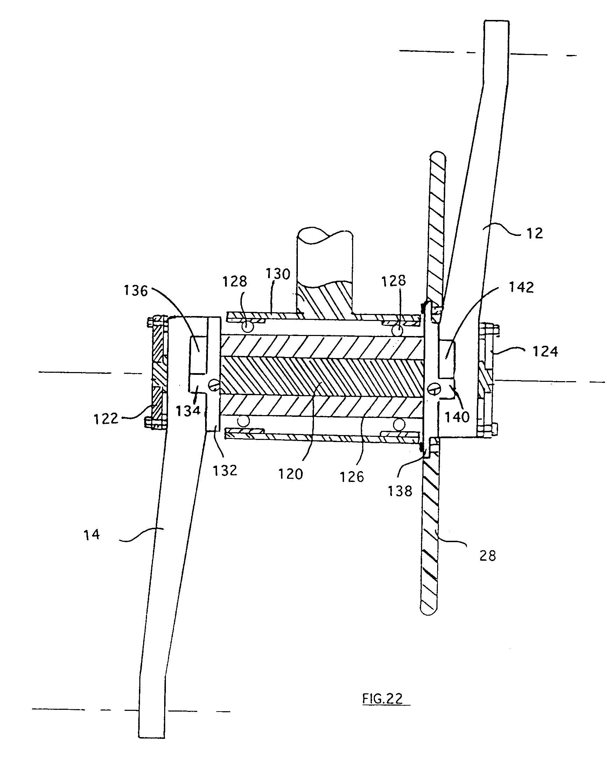

En référence aux figures 21 et 22, le dispositif de suspension 36 est formé par une barre de torsion 120 fixée par ses extrémités à des flasques 122, 124, lesquelles sont solidarisées par des vis aux manivelles 12, 14. La barre de torsion 120 est libre en rotation à l'intérieur d'un axe d'entraînement 126 transversal, lequel est monté sur des roulements 128 dans le boîtier de pédalier 130. Une première bague d'arrêt 132 est fixée sur l'extrémité de gauche de l'axe d'entraînement 126, et comporte une protubérance 134 logée dans une rainure 136 de la manivelle 14. Une deuxième bague d'arrêt 138 est montée d'une manière similaire sur l'extrémité de droite de l'axe d'entraînement 126, et est équipée également d'une protubérance 140 agencée dans une rainure 142 de la manivelle 12. Les plateaux de transmission 28 sont montés sur la deuxième bague d'arrêt 138.

Un tel dispositif de suspension fonctionne indifféremment avec le pied gauche ou le pied droit en arrière.

Lors de la phase de suspension, la barre de torsion 120 est soumise à des contraintes de torsion lorsque le cycliste est en appui sur les pédales. Il en résulte un débattement angulaire de valeur θ entre les manivelles 12, 14, la protubérance 134 n'étant pas en contact avec la première bague d'arrêt 132 lorsque le cycliste est en appui sur les pédales avec la manivelle 14 de gauche en position arrière.

Pour la position arrière de la manivelle droite 12, la protubérance 14 n'est pas en contact avec la deuxième bague d'arrêt 138, autorisant la formation d'un débattement angulaire entre ladite bague 138 et la manivelle 12.

Pour la fonction pédalage, les protubérances 134, 140 se trouvent en engagement avec les bagues d'arrêt 132, 138 provoquant l'entraînement direct de l'axe 126 par les manivelles 12, 14.

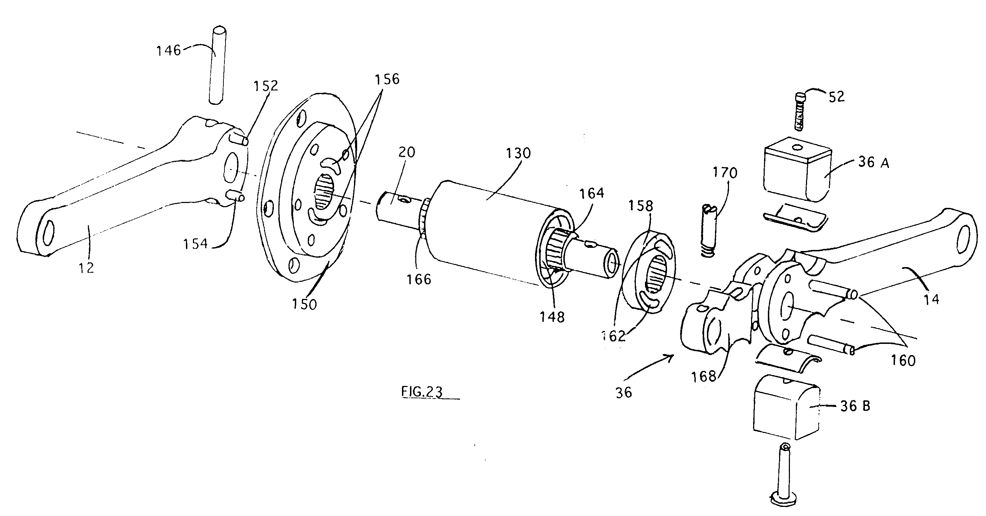

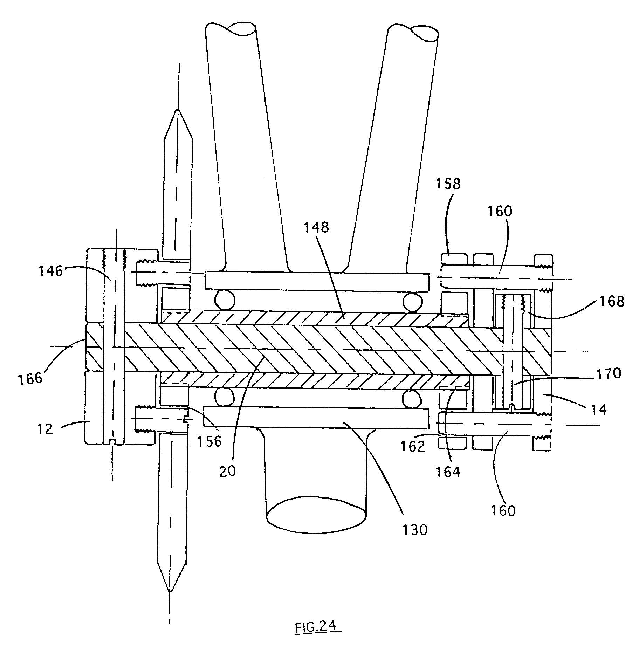

En référence à la variante des figures 23 et 24, le dispositif de suspension 36 peut être installé côté droit du cycle ou côté gauche du cycle, et assurer cependant la suspension du cycliste pied droit en avant ou pied gauche en avant. La manivelle 12 est solidaire de l'axe du pédalier 20 au moyen de la clavette 146. Cet axe 20 est libre en rotation à l'intérieur du tambour 148, lui-même libre en rotation par rapport au boîtier 130 lié au cadre. La manivelle 12 entraîne le plateau 150 supportant les couronnes dentées 28 par l'intermédiaire de tiges 152, 154 qui s'engagent dans les trous oblongs 156.

L'autre manivelle 14 est articulée sur l'axe 20 et entraîne la couronne 158 dans le sens du pédalage, les tiges 160 s'engageant dans les trous oblongs 162. L'intérieur de la couronne 158 est cannelée et s'emmanche sur les cannelures 164 de l'axe 20, dont l'autre extrémité 166 est elle même emmanchée sur le plateau 150. Ainsi la couronne 158 est rigidement liée au plateau 150. Lors du pédalage, la manivelle 14 entraîne la couronne 158 suivi de la rotation du plateau de transmission 150.

Lors de la fonction de suspension, la manivelle 12 est rigidement liée au bras de commande 168 par l'intermédiaire de l'axe 20 et des clavettes 146 et 170. Si une force est exercée dans la sens du pédalage sur une des manivelles et dans le sens de rétropédalage sur l'autre manivelle , un angle va se former entre le bras 168 et la la manivelle 14, provoquant la compression des moyens de suspension 36A, 36B. On obtient ainsi une liaison élastique bidirectionnelle entre les deux manivelles 12, 14. La force de rappel de cette liaison élastique peut être modifiée au moyen de la vis 52 d'ajustage.

La forme oblongue des trous 156, 162 réalisés respectivement dans le plateau 150 et la couronne 158 permet une rotation relative des deux manivelles 12, 14.

## Revendications

1. Dispositif de pédalage pour des cycles à pédales, comprenant:
- une première manivelle (12) située à droite, et une deuxième manivelle (14) disposée à gauche par rapport au cadre support (16) dans le sens d'avancement du cycle,
- une pédale (22, 24) articulée à l'extrémité de chaque manivelle (12, 14) sur laquelle prend appui le pied gauche ou droit du cycliste,
- un axe de pédalier (20) en liaison mécanique avec les deux manivelles (12, 14) et associé à des moyens de transmission (26) ayant notamment une couronne dentée (28) et une chaîne (30) d'entraînement de la roue arrière (32) du cycle,
caractérisé en ce que le dispositif de pédalage (10) comporte de plus:
- des moyens d'actionnement (34) susceptibles d'occuper un premier état de pédalage autorisant une transmission mécanique directe du couple exercé par les pédales (22, 24) dans le sens de pédalage grâce à un accouplement rigide en rotation des deux manivelles (12, 14) par rapport aux moyens de transmission (26), et un deuxième état d'amortissement faisant usage d'un dispositif à suspension (36) procurant un accouplement élastique en rotation des deux manivelles (12, 14) par rapport au cadre (16) lorsque l'utilisateur se trouve en appui sur les deux pédales (22, 24) en exerçant des efforts antagonistes sans pédaler.

2. Dispositif de pédalage selon la revendication 1, caractérisé en ce que les moyens d'actionnement (34) comportent un premier organe de commande (38) solidaire de l'axe de pédalier (20), et un deuxième organe de commande solidaire de la manivelle (12, 14) correspondante, les deux organes étant rendus solidaires dans le premier état de pédalage classique, et se trouvant indépendants l'un de l'autre dans le deuxième état suite à un mouvement relatif de basculement déterminé par l'intervention du dispositif à suspension (36).

3. Dispositif de pédalage selon la revendication 2, caractérisé en ce que le dispositif à suspension (36) est logé dans un berceau (44) du deuxième organe de commande, et est réalisé au moyen d'un ressort, d'un bloc en matériau élastomère, ou d'un système oléopneumatique, relié au premier organe de commande (38) par une tige de liaison (48), le dispositif à suspension (36) étant équipé d'un système de réglage de la précontrainte pour ajuster le déplacement relatif des premier et deuxième organes en fonction du poids du cycliste.

4. Dispositif de pédalage selon la revendication 2, caractérisé en ce que le premier organe de commande comporte un levier (62) logé dans un carter (60) solidaire de la manivelle (14), le dispositif à suspension (36) se trouvant en appui sur la manivelle (14) à l'extérieur du carter (60).

5. Dispositif de pédalage selon la revendication 1, caractérisé en ce que le dispositif à suspension (36) est doté d'une paire de modules (36A, 36B) travaillant en série et réunis entre eux par une tige de liaison (68) commune, le premier module (36A) coopérant avec le levier de commande (62) solidaire de l'axe du pédalier (20) et avec une première cavité (70) de la manivelle (14), et le deuxième module (36B) étant en appui dans une deuxième cavité (72) de la manivelle (14) située à l'opposé de la première cavité (70).

6. Dispositif de pédalage selon la revendication 1, caractérisé en ce que le dispositif à suspension (36) comporte une paire de modules (36A, 36B) travaillant en parallèle, et réunis par deux tiges de liaison (76, 78) avec les extrémités opposées d'une fourchette (74) de commande solidaire de l'axe de pédalier (20).

7. Dispositif de pédalage selon la revendication 1, caractérisé en ce que le premier organe de commande comprend un levier (90) monté coaxialement sur l'axe de pédalier (20), et ayant un premier bras (90A) portant l'axe d'articulation décentré de la manivelle (14), le dispositif de suspension (36) prenant appui sur la manivelle (14) en étant connecté mécaniquement au deuxième bras (90B) par une tige de liaison (64).

8. Dispositif de pédalage selon la revendication 2, caractérisé en ce que le bras de commande (102) solidaire de l'axe de pédalier (20) porte à son extrémité un axe (104) d'articulation de la manivelle (14), le dispositif de suspension (36) comprenant une pluralité de barres (106) de flexion de formes allongées, fixées sur les bras de commande (102) par des moyens de fixation (108, 110).

9. Dispositif de pédalage selon la revendication 1, caractérisé en ce que le dispositif de suspension (36) est formé par une barre de torsion (120) solidaire des manivelles (12, 14), et montée libre en rotation à l'intérieur d'un axe d'entraînement (126), les moyens d'actionnement (34) comprenant de plus:
- une première bague d'arrêt (132) fixée à l'une des extrémités de l'axe d'entraînement (126) et étant dotée d'une protubérance (134) logée dans une rainure (136) de la manivelle (14),
- et une deuxième bague d'arrêt (138) fixée à l'autre extrémité de l'axe d'entraînement (126), et étant pourvue d'une protubérance (140) agencée dans une rainure (142) de la première manivelle (12), la couronne dentée (28) étant solidaire de la deuxième bague d'arrêt (138).

10. Dispositif de pédalage selon la revendication 1, caractérisé en ce que le dispositif de suspension (36) est situé d'un côté du cadre en étant associé à la deuxième manivelle (14) articulée sur l'axe de pédalier (20), et comprenant de plus:
- une couronne (158) accouplée à l'une des extrémités de l'axe de pédalier (20), et ayant au moins un trou oblong (162) dans lequel s'engage une tige (160) de transmission solidaire de la deuxième manivelle (14),
- un plateau (150) de support de la couronne dentée, et accouplé en rotation sur l'autre extrémité de l'axe de pédalier (20),
- des moyens d'accouplement à tiges (152, 154) pour solidariser la première manivelle (12) au plateau (150),
- un tambour (148) monté à rotation libre et s'étendant coaxialement par rapport à l'axe de pédalier (20), et le boîtier (130) du cadre, l'ensemble étant agencé pour assurer la fonction suspension avec le pied droit ou gauche en avant.

## Claims

1. A pedaling device for pedal cycles, comprising :
- a first crank (12) located on the right, and a second crank (14) located on the left with respect to the support frame (16) in the direction of forward movement of the cycle,
- a pedal (22,24) articulated at the end of each crank (12,14) on which the cyclist's left or right foot presses,
- a crank-gear spindle (20) in mechanical connection with the two cranks (12, 14) and associated to transmission means (26) having notably a toothed crown-wheel (28) and a chain (30) driving the rear wheel (32) of the cycle,
characterized in that the pedaling device (10) comprises in addition :
- actuating means (34) able to occupy a first pedaling state allowing direct mechanical transmission of the torque exerted by the pedals (22, 24) in the pedaling direction due to a rigid coupling in rotation of the two cranks (12, 14) with respect to the transmission means (26), and a second damping state making use of a suspension device (36) procuring a flexible coupling in rotation of the two cranks (12, 14) with respect to the frame (16), when the user is pressing on both the pedals (22, 24) exerting opposing forces without pedaling.

2. The pedaling device according to claim 1, characterized in that the actuating means (34) comprise a first operating part (38) securedly united to the crank-gear spindle (20), and a second operating part securedly united to the corresponding crank (12, 14), the two parts being rendered securedly united in the first conventional pedaling state, and being independent from one another in the second state following a relative rocking movement determined by operation of the suspension device (36).

3. The pedaling device according to claim 2, characterized in that the suspension device (36) is housed in a cradle (44) of the second operating part, and is achieved by means of a spring, a block made of elastomer material, or an oleo-pneumatic system, joined to the first operating part (38) by a link rod (48), the suspension device (36) being equipped with a prestress adjustment system to adjust the relative movement of the first and second parts according to the weight of the cyclist.

4. The pedaling device according to claim 2, characterized in that the first operating part comprises a lever (62) housed in a housing (60) securedly united to the crank (14), the suspension device (36) pressing against the crank (14) outside the housing (60).

5. The pedaling device according to claim 1, characterized in that the suspension device (36) is equipped with a pair of modules (36A, 36B) working in series and joined to one another by a common connecting rod (68), the first module (36A) cooperating with the operating lever (62) securedly united to the crank-gear spindle (20) and with a first cavity (70) of the crank (14), and the second module (368) being pressed in a second cavity (72) of the crank (14) located opposite the first cavity (70).

6. The pedaling device according to claim 1, characterized in that the suspension device (36) comprises a pair of modules (36A, 36B) working in parallel and joined by two connecting rods (76, 78) with the opposite ends of an operating fork (74) securedly united to the crank-gear spindle (20).

7. The pedallng device according to claim 1, characterized in that the first operating part comprises a lever (90) coaxially mounted on the crank-gear spindle (20), and having a first arm (90A) bearing the off-centered articulation spindle of the crank (14), the suspension device (36) pressing on the crank (14) and being mechanically linked to the second arm (90B) by a connecting rod (64).

8. The pedaling device according to claim 2, characterized in that the operating arm (102) securedly united to the crank-gear spindle (20) bears at its end an articulation spindle (104) of the crank (14), the suspension device (36) comprising a plurality of flection bars (106) of elongated shapes fixed onto the operating arms (102) by fixing means (108, 110).

9. The pedalling device according to claim 1, characterized in that the suspension device (36) is formed by a torsion bar (120) securedly united to the cranks (12, 14,) and mounted free in rotation inside a driving spindle (126), the actuating means (34) comprising in addition :
- a first stop ring (132) fitted to one of the ends of the driving spindle (126) and provided with a protuberance (134) housed in a groove (136) of the crank (14),
- and a second stop ring (138) fitted to the other end of the driving spindle (126), and provided with a protuberance (140) arranged in a groove (142) of the first crank (12), the toothed crown-wheel (28) being securedly united to the second stop ring (138).

10. The pedaling device according to claim 1, characterized in that the suspension device (36) is located on one side of the frame and is associated to the second crank (14) articulated on the crank-gear spindle (20), and comprising in addition :
- a crown-wheel (158) coupled to one of the ends of the crank-gear spindle (20), and having at least one oblong hole (162) in which a transmission rod (160) securedly united to the second crank (14) engages,
- a support plate (150) of the toothed crown-wheel, coupled in rotation on the other end of the crank-gear spindle (20),
- coupling means with rods (152, 154) to securedly unite the first crank (12) to the plate (150),
- a drum (148) mounted with free rotation and extending coaxially with respect to the crank-gear spindle (20), and the housing (130) of the frame, the assembly being arranged to perform the suspension function with the right or left foot to the front.

## Patentansprüche

1. Fahrradpedalvorrichtung mit :
- einer ersten rechts gelagerten Kurbel (12) und einer zweiten links gelagerten Kurbel (14) in Bezug auf den Tragrahmen (16) in die Vorwärtsrichtung des Fahrrades,
- einer Pedale (22, 24), die am Ende jeder Kurbel (12, 14) beweglich gelagert ist, auf die sich der linke oder rechte Fuss des Radfahrers stützt,
- einem Tretlager (20), das in mechanischer Verbindung mit den beiden Kurbeln (12, 14) steht, und mit Übertragungsmitteln (26) verbunden ist, die insbesondere einen Zahnkranz (28) und eine Antriebskette (30) des hinteren Rades (32) des Fahrrades aufweisen,
dadurch gekennzeichnet, dass die Pedalvorrichtung (10) ausserdem aufweist :
- Betätigungsmittel (34), die eine erste Tretstellung einnehmen können, die eine direkte, mechanische Übertragung der auf die Pedalen (22, 24) ausgeübten Kraft in die Tretrichtung erlauben dank einer starren Kupplung zur Drehung der beiden Kurbeln (12, 14) in Bezug auf die Übertragungsmittel (26), und eine zweite Dämpfungsstellung, welche von einer Federungsvorrichtung (36) Gebrauch macht, die eine elastische Kupplung zur Drehung der beiden Kurbeln (12, 14) in Bezug auf den Rahmen (16) verschafft, wenn der Benutzer sich auf beide Pedalen (22, 24) stützt und dabei gegenwirkende Kräfte ausübt, ohne zu treten.

2. Fahrradpedalvorrichtung gemäss Anspruch 1, dadurch gekennzeichnet, dass die Betätigungsmittel (34) ein erstes mit der Tretlagerachse (20) verbundenes Steuerelement (38) und ein zweites mit der entsprechenden Kurbel (12, 14) verbundenes Steuerelement aufweisen, wobei die beiden Elemente in der ersten herkömmlichen Tretstellung verbunden sind, und unabhängig voneinander in der zweiten Stellung sind, nach einer relativen Schwenkbewegung, die durch das Eingreifen der Federungsvorrichtung (36) bestimmt wird.

3. Fahrradpedalvorrichtung gemäss Anspruch 2, dadurch gekennzeichnet, dass die Federungsvorrichtung (36) in einem Bogen (44) des zweiten Steuerelementes gelagert ist, und aus einer Feder, einem Elastomer-Block oder einem Öl-Luftdruck-System besteht, und mit dem ersten Steuerelement (38) durch eine Verbindungsstange (48) verbunden ist, wobei die Federungsvorrichtung (36) mit einem Reguliersystem der Vorspannung ausgerüstet ist, um die relative Bewegung des ersten und zweiten Elementes in Abhängigkeit vom Gewicht des Radfahrers zu regeln.

4. Fahrradpedalvorrichtung gemäss Anspruch 2, dadurch gekennzeichnet, dass das erste Steuerelement einen Hebel (62) aufweist, der in einem mit der Kurbel (14) verbundenen Gehäuse (60) aufweist, wobei sich die Federungsvorrichtung (36) auf die Kurbel (14) ausserhalb des Gehäuses (60) stützt.

5. Fahrradpedalvorrichtung gemäss Anspruch 1, dadurch gekennzeichnet, dass die Federungsvorrichtung (36) mit einem Paar von in Serie arbeitenden Modulen (36A, 36B) versehen ist, die miteinander durch eine gemeinsame Verbindungsstange (68) vereint sind, wobei das erste Modul (36A) mit dem mit der Tretlagerachse (20) verbundenen Steuerhebel (62) und mit einer ersten Aushöhlung (70) der Kurbel (14) zusammenarbeitet, und wobei das zweite Modul (36B) in einer zweiten Aushöhlung (72) der Kurbel (14) aufliegt, die gegenüber der ersten Aushöhlung (70) gelegen ist.

6. Fahrradpedalvorrichtung gemäss Anspruch 1, dadurch gekennzeichnet, dass die Federungsvorrichtung (36) ein Paar parallel arbeitende Module (36A, 36B) aufweist, die durch zwei Verbindungsstangen (76, 78) mit den entgegengesetzten Enden einer Steuergabel (74) vereint sind, welche mit der Tretlagerachse (20) verbunden ist.

7. Fahrradpedalvorrichtung gemäss Anspruch 1, dadurch gekennzeichnet, dass das erste Steuerelement einen Hebel (90) aufweist, der koachsial auf der Tretlagerachse (20) gelagert ist, und einen ersten Arm (90A) besitzt, der die dezentrierte Gelenkachse der Kurbel (14) trägt, wobei sich die Federungsvorrichtung (36) auf die Kurbel (14) stützt und dabei mechanisch mit dem zweiten Arm (90B) durch eine Verbindungsstange (64) verbunden ist.

8. Fahrradpedalvorrichtung gemäss Anspruch 2, dadurch gekennzeichnet dass der mit der Tretlagerachse (20) verbundene Steuerarm (102) an seinem Ende eine Gelenkachse (104) der Kurbel (14) trägt, wobei die Federungsvorrichtung (36) eine Mehrzahl von Biegungsstäben (106) von länglicher Form aufweist, die auf den Steuerarmen (102) durch Befestigungsmittel (108, 110) befestigt sind.

9. Fahrradpedalvorrichtung gemäss Anspruch 1, dadurch gekennzeichnet, dass die Federungsvorrichtung (36) von einem mit den Kurbeln (12, 14) verbundenen Verdrehungsstab (120) gebildet wird, und frei drehbar im Innern der Antriebsachse (126) gelagert ist, wobei die Betätigungsmittel (34) ausserdem aufweisen :
- einen ersten Anschlag-Ring (132), der an einem der Enden einer Antriebsachse (126) befestigt ist und mit einer Protuberanz (134) versehen ist, die in einer Rille (136) der Kurbel (14) gelagert ist,
- und einen zweiten Anschlag-Ring (138), der mit dem anderen Ende der Antriebsachse (126) befestigt ist, und mit einer Protuberanze (140) versehen ist, die in einer Rille (142) der ersten Kurbel (12) angeordnet ist, wobei der Zahnkranz (28) mit dem zweiten Anschlag-Ring (138) verbunden ist.

10. Fahrradpedalvorrichtung gemäss Anspruch 1, dadurch gekennzeichnet, dass die Federungsvorrichtung (36) auf einer Seite des Rahmens gelegen ist und dabei mit der zweiten auf der Tretlagerachse (20) beweglich gelagerten Kurbel (14) verbunden ist und ausserdem aufweist :
- einen Kranz (158), der an eins der Enden der Tretlagerachse (20) gekuppelt ist, und mindestens ein längliches Loch (162) besitzt, in das eine Übertragungsstange (16) eindringt, die mit der zweiten Kurbel (14) verbunden ist,
- eine Tragplatte (150) des Zahnkranzes, die drehbar an dem anderen Ende der Tretlagerachse (20) gekuppelt ist,
- Stangen-Kupplungsmittel (152, 154), um die erste Kurbel (12) mit der Platte (150) zu verbinden,
- eine Trommel (148), die frei drehbar gelagert ist, und die sich koachsial in Bezug auf die Tretlagerachse (20) erstreckt und dem Gehäuse (130) des Rahmens, wobei das Ganze so ausgeführt ist, um die Federungsfunktion mit dem rechten oder linken Fuss nach vorne zu gewährleisten.
